# EUROPEAN PATENT APPLICATION

(11) **EP 1 010 674 A2**
(43) Date of publication of application: **21.06.2000**
(21) Application number: 99124763.6
(22) Date of filing: 13.12.1999
(51) Int. Cl.: C03B 40/027

(54) **Release coating for glass molds**

(30) Priority: 14.12.1998 US 210537
(71) Applicant: PRAXAIR S.T. TECHNOLOGY, INC., Danbury, Connecticut 06810-5113 (US)
(72) Inventor: Leconte, Christian, 42480 La Fouillouse (FR)
(74) Representative: Schwan, Gerhard, Dipl.-Ing.

(57) **Abstract**

A release coating for molds utilized in the manufacture of glass products comprising a chromium carbide applied by high velocity thermal spray techniques.

## Description

The present invention relates to a coating to effect releaseability of product from glass product forming molds. In particular, the invention relates to a chromium carbide coating to effect releaseability of glass products from metallic molds without the need for swabbing.

During the manufacturing process for making glass packaging containers, such as bottles and jars, molten glass having a temperature typically about 1000-1150°C comes in contact with and is processed using various metallic components such as scoops, troughs, deflectors, and the like, which serve as the delivery system to the individual section machines, as well as the molds (blank and blow molds) and plungers used for pressing the molten glass in the molds. Although the contact between these components and the molten glass is very brief (e.g., the speed of a drop of molten glass is about 6m/sec at the output of the deflector, and the duration of the stay of the drop of molten glass in the mold itself is between 1 second for a standard 25 cl. beer bottle), the temperature of the metal components contacted by the molten glass increases significantly. For example, the inner surface of the molds rises to about 550°C-650°C during processing. Considerable oxidation occurs on the cast iron mold surfaces at these temperatures, adversely impacting the surface quality of the mold. In turn, the nature of the contact between the molten glass and the hot metallic components is highly determinative of the quality of the finished glass product emerging from the mold. Microcracks and optical and geometrical faults develop on the surface of the glass products if a smooth sliding interaction between molten glass and hot mold surface is not accomplished during forming and release operations. Any microcracks or faults in the glass products may seriously impact resistance to pressure and may result in catastrophic bursting of the product.

The traditional technique for preventing glass products from sticking to fabrication molds and ensuring easy sliding of the glass in the molds involves manual lubrication referred to in the trade as "swabbing". The release material that is applied to the molds by swabbing generally is a graphite grease. The normal practice requires the molds to be lubricated with this grease about every 20 minutes of production. The process is not very operator or environment friendly as it is physically dangerous to conduct the swabbing, and smoke and odorous gases are generated during use.

An alternative technique for lubricating molds is referred to as "sooting". In this procedure, instead of manually applying graphite grease to the surface of the mold, cracking of acetylene is used as a method of generating soot containing graphite which is automatically deposited on the internal surfaces of the bottle molds as they open to release the molded glass product. Sooting requires that the standard molding equipment be retrofitted with acetylene, oxygen and the like, and uniform sooting lubrication is difficult to achieve on large molding machines.

Another way to deposit lubricant to the surface of the molds is to paint the molds with a graphite-based solid film lubricant. These paints generally contain graphite in a polymeric binder and, in practice, after application, must be heated for a few hours at about 200-300°C. Unfortunately, the durability of even the best commercial solid film lubricants is less that about 12 hours of production.

Now, according to the present invention, a coating for glass forming molds is accomplished which effects sliding and releaseability without the disadvantages of the prior swabbing, sooting, and painting lubrication techniques. The coating of the present invention comprises a metal carbide material, selected from chromium carbides, tungsten carbides, hafnium carbides, niobium carbides, refractory metal carbides, and the like. The metal carbide may be combined with a metallic binder, selected from the group consisting of nickel, cobalt, iron, chromium, alloys thereof, and the like. The preferred coating material is a chromium carbide (e.g., Cr₃C₂, Cr₇C₃, Cr₂₃C₆, and the like). Particularly preferred are chromium carbides with a metal binder which feature the composition, in weight percent, 60-90% chromium carbide and 10-40% nickel chrome. Most preferably, the coating is a chromium carbide with a metal binder which features the composition, in weight percent, 80% chromium carbide and 20% nickel chrome. Specifically preferred is a chromium carbide with a metal binder which features the composition, in weight percent, 80(92Cr-8C) + 20(80Ni-20Cr). The coating material may be applied to the glass forming mold by employing any conventional thermal spraying technique. Typical thermal spraying techniques include Detonation Gun (D-Gun™ or Super D-Gun™ processes), high velocity oxy-fuel (HVOF), and plasma arc. The thermal spraying technique preferably features a particle velocity greater than about 500 m/sec. The preferred technique for applying the chromium carbide coating is by Detonation Gun (D-Gun™ or Super D-Gun™), featuring a particle velocity greater than about 700m/sec. The preferred thickness of the coating ranges from about 30µm to about 100µm, most preferably about 40µm. Preferably, the surface topography of the metal carbide coating features an Ra value ranging from about 3.0µm to about 4.0µm. Most preferably, the Ra value is about 3.2µm to about 3.7µm.

The chromium carbide coating provides a surface which is much more resistant to oxidation than the typical cast iron inner surface of a mold. Cast iron oxidizes quickly at 550°C and forms a thick (a few micrometers) oxidation layer; the chromium carbide coating oxidizes only to the extent of about a few nanometers. The hardness of the coatings, further, exceeds cast iron at room temperature as well as 550°C, and the surface, in particular the edges, features improved mechanical behavior.

The following example is provided to further describe the invention. The example is intended to be illustrative in nature and is not to be construed as limiting the scope of the invention.

### Example 1

According to the present invention, the internal surfaces of cast iron simulated glass bottle molds were coated to a thickness of about 40µm, using D-Gun coating application techniques, with a chromium carbide having the composition:

80(92Cr-8C) + 20(80Ni-20Cr).

The coated molds then were then tested for commercial production glass forming efficacy by working the molds in a laboratory test setting and observing glass flow and sticking performance. It was noted that the surface topography of the coating had a significant impact on the effective performance of the coated mold under glass production conditions. The principal parameter specified in the industry for roughness is the roughness average, Ra, defined in ASME B46.1. Ra refers to the average difference in micrometers (µm) between peaks and valleys in the surface of the coating. A mold surface featuring an Ra value of 3.537µm provided 110 hours of favorable glass bottle production performance without the need for any grease application to the mold surfaces. The same mold with a "rougher" surface, as well as a "smoother" surface having a measured Ra value of 2.601µm, performed unsatisfactorily with glass sticking to the mold surface.

### Example 2

According to the present invention, the internal surfaces of a cast production iron glass bottle mold was coated to a thickness of about 40µm, using D-Gun coating application techniques, with a chromium carbide having the composition:

80(92Cr-8C) + 20(80Ni-20Cr).

The coated mold then was then tested for actual commercial production glass forming efficacy by working the mold and observing glass flow and sticking performance. It was noted that the surface topography of the coating had a significant impact on the effective performance of the coated mold under glass production conditions. The initial mold surface featured an Ra value of about 3.2µm and provided about 12 weeks of favorable glass bottle production performance without the need for any grease application to the mold surfaces. The coated mold eventually wore out to a smoother surface having an Ra value of about 1.7µm, which performed unsatisfactorily with glass sticking to the mold surface.

The examples demonstrate application of the release coating of the present invention directly to the internal mold surfaces. Alternatively, an undercoat may be applied to the surface of the glass forming mold prior to the application of the release coating. A suitable undercoat may be a metallic undercoat of a material such as nickel, nickel chromium, nickel aluminum, and the like. Various other modifications of the disclosed embodiments, as well as other embodiments of the invention, will be apparent to those skilled in the art upon reference to this description, or may be made without departing from the spirit and scope of the invention defined in the appended claims.

## Claims

1. A release coating for molds utilized in the manufacture of glass products comprising a metal carbide selected from the group consisting of chromium carbides, tungsten carbides, hafnium carbides, niobium carbides, refractory metal carbides, and the like and a metallic binder selected from the group consisting of nickel, cobalt, iron, chromium, alloys thereof, and the like.

2. The coating of Claim 1 wherein the metal carbide is chromium carbide.

3. The coating of Claim 1 wherein the coating has the composition, in weight percent, 60-90% chromium carbide and 10-40% nickel chrome.

4. The coating of Claim 3 wherein the coating has the composition, in weight percent, 30% chromium carbide and 20% nickel chrome.

5. The coating of Claim 3 wherein the coating has the composition, in weight percent, 80(92Cr-8C) + 20(80Ni-20Cr).

6. The coating of Claim 3 wherein the coating is applied by thermal spraying techniques featuring a particle velocity greater than about 500 m/sec.

7. The coating of Claim 6 wherein the coating is applied with a detonation gun.

8. The coating of Claim 7 having a thickness ranging from about 30µm to about 100µm.

9. The release coating of Claim 1 for molds utilized in the manufacture of glass products comprising a chromium carbide having the composition 80(92Cr-8C) + 20(80Ni-20Cr) applied by detonation gun techniques to a thickness of about 30µm to about 100µm.

10. The release coating of Claim 1 for molds utilized in the manufacture of glass products having a surface topography with an Ra value ranging from about 3.0µm to about 4.0µm.
